# EUROPEAN PATENT APPLICATION

(11) **EP 4 672 101 A1**
(43) Date of publication of application: **31.12.2025**
(21) Application number: 24759988.9
(22) Date of filing: 22.01.2024
(51) Int. Cl.: G06Q 10/04, G06Q 10/00

(54) **MEASURE EVALUATION ASSISTANCE METHOD, MEASURE EVALUATION ASSISTANCE PROGRAM, AND MEASURE EVALUATION ASSISTANCE DEVICE**

(30) Priority: 24.02.2023 JP 2023027450
(71) Applicant: FUJITSU LIMITED, Kawasaki-shi, Kanagawa 211-8588 (JP)
(72) Inventor: ICHIKAWA, Shizuko, Kawasaki-shi, Kanagawa 211-8588 (JP); ITO, Toshio, Kawasaki-shi, Kanagawa 211-8588 (JP); YAMAOKA, Hisatoshi, Kawasaki-shi, Kanagawa 211-8588 (JP)
(74) Representative: Hoffmann Eitle
(86) International application number: PCT/JP2024/001666
(87) International publication number: WO 2024/176681

(57) **Abstract**

[PROBLEM] Assist a user in evaluating measures without imposing an excessive burden on the user.

[SOLUTION TO PROBLEM] A server plots a result of evaluating a plurality of measures by a plurality of evaluation items (FIG. 4(a)) in an evaluation value space having the plurality of evaluation items as coordinate axes (FIG. 4(b)), coordinate-transforms the evaluation value space by setting a weight for each of the plurality of evaluation items based on values information of a user (FIG. 4(c)), extracts a plurality of pairs of measures based on degrees of similarities of the plurality of measures in the coordinate-transformed evaluation value space (FIG. 4(d)), and creates a goodness distribution chart in the evaluation value space (FIG. 4(e)) based on results of relative evaluation by the user of goodness or badness between the measures included in each extracted pair, and transmits the chart to the user terminal.

## Description

### TECHNICAL FIELD

The present invention relates to a measure evaluation assistance method, a measure evaluation assistance program, and a measure evaluation assistance device.

### BACKGROUND ART

In order to solve complex social issues, it is necessary to consider balanced solutions (measures) from a broad viewpoint rather than from a single viewpoint. For this purpose, each interested party (stakeholder) needs to evaluate each of the measures by means of a plurality of evaluation items (evaluation indices). In this case, since each interested party has different values and the evaluation items that each stakeholder values are different, the measures that each interested party considers good often do not match. Therefore, each interested party needs to bring a measure that each interested party evaluates as good and determine the best measure through discussion or the like.

In this case, it is preferable that it is clear which evaluation item is important to each interested party. Therefore, it is considered to be highly convenient if a distribution (goodness distribution) indicating a range evaluated as good or a range evaluated as bad by each interested party in a space having a plurality of evaluation items as coordinate axes can be created and presented.

Conventionally, in a work of correcting a photograph, a method of assisting a search in a parameter space of a plurality of design parameters when adjusting the plurality of design parameters such as brightness, contrast, saturation, and color balance is known (for example, see Non-Patent Literature 1). In this Non-Patent Literature 1, a technique is disclosed in which a large amount of results of pairwise comparisons of designs with two parameter sets are collected, and the goodness distribution is estimated based on this data.

### CITATION LIST

### NON PATENT LITERATURE

NPL 1: Yuki Koyama, Daisuke Sakamoto, Takeo Igarashi, "Visual Design Exploration with Crowd-Powered Parameter Analysis", Computer Software, Japan Society for Software Science, 2016, Vol. 33(1), p. 63-77

### PATENT LITERATURE

PTL 1: Japanese Patent Application Laid-Open No. 2022-107998

### SUMMARY OF THE INVENTION

### TECHNICAL PROBLEM

In the above Non-Patent Literature 1, a pairwise comparison is performed by presenting two designs to the user and asking him or her to assign a relative score, but in order to estimate the goodness distribution accurately, a large number of pairwise comparisons are required to be performed.

On the other hand, when estimating the goodness distribution in the space for evaluating the measure, it is conceivable to present two measures to the user and cause the user to perform a pairwise comparison as in the above Non-Patent Literature 1. However, in the case of measures, since the effort required for a single pairwise comparison is so great that it is impractical to force the user to perform a large number of pairwise comparisons.

In one aspect, the present invention aims to provide a measure evaluation assistance method, a measure evaluation assistance program, and a measure evaluation assistance device capable of assisting the uses in evaluating measures without imposing an excessive burden on the user.

### SOLUTION TO PROBLEM

In one aspect, a measure evaluation assistance method is a measure evaluation assistance method implemented by a computer executing a process, the process including: plotting a result of evaluation of each of a plurality of measures by a plurality of evaluation items on a first evaluation value space having the plurality of evaluation items as coordinate axes; setting a weight for each of the plurality of evaluation items based on a degree to which a user emphasizes each of the plurality of evaluation items, and generating a second evaluation value space by reflecting the weight on each of the coordinate axes of the first evaluation value space; extracting a plurality of combinations of measures based on degrees of similarities of the plurality of measures in the second evaluation value space; and creating a distribution chart indicating a range in which evaluation by the user is high and a range in which the evaluation by the user is low in the first evaluation value space, based on a result of relative evaluation by the user of goodness or badness between measures included in each of extracted combinations, and outputting the distribution chart.

### ADVANTAGEOUS EFFECTS OF INVENTION

It is possible to assist the user in evaluating measures without imposing an excessive burden on the user.

### BRIEF DESCRIPTION OF THE DRAWINGS

[FIG. 1] Presented is a diagram schematically illustrating a configuration of a measure evaluation assistance system according to an embodiment.
[FIG. 2] FIG. 2(a) is a diagram illustrating an example of a hardware configuration of a server, and FIG. 2(b) is a diagram illustrating an example of a hardware configuration of a user terminal.
[FIG. 3] Presented is a functional block diagram of a server.
[FIG. 4] FIG. 4(a) to FIG. 4(e) are diagrams illustrating an overview of a process executed by the server.
[FIG. 5] Presented is a flowchart illustrating a process executed by the server.
[FIG. 6] Presented is a flowchart illustrating a process of step S12 in FIG. 5.
[FIG. 7] FIG. 7(a) to FIG. 7(c) are diagrams for describing a process of a measure simulation unit.
[FIG. 8] FIG. 8(a) and FIG. 8(b) are diagrams illustrating examples of values information received by an input reception unit.
[FIG. 9] FIG. 9(a) to FIG. 9(e) are diagrams for describing processes of a coordinate transformation unit and a question generation unit.
[FIG. 10] FIG. 10(a) and FIG. 10(b) are diagrams for describing the process of the question generation unit.
[FIG. 11] FIG. 11(a) and FIG. 11(b) are diagrams illustrating examples of screens of a relative evaluation questionnaire.
[FIG. 12] FIG. 12(a) and FIG. 12(b) are diagrams illustrating examples of answer data for the relative evaluation questionnaire.
[FIG. 13] FIG. 13(a) and FIG. 13(b) are diagrams illustrating examples of a screen transmitted to a user terminal in step S18 of FIG. 5.
[FIG. 14] FIG. 14(a) and FIG. 14(b) are diagrams illustrating examples of a screen transmitted to the user terminal in step S22 of FIG. 5.
[FIG. 15] Presented is a flowchart illustrating a process according to a variation.
[FIG. 16] FIG. 16(a) and FIG. 16(b) are diagrams for describing a process of FIG. 15.

### DESCRIPTION OF EMBODIMENTS

### <<First Embodiment>>

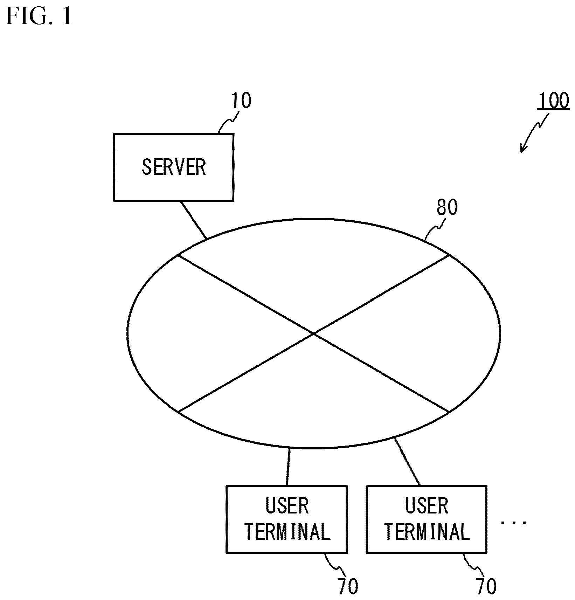

Hereinafter, an embodiment of a measure evaluation assistance system will be described in detail with reference to FIG. 1 to FIG. 14.

FIG. 1 schematically illustrates a configuration of a measure evaluation assistance system 100 according to an embodiment. The measure evaluation assistance system 100 is a system used when a local government and a business operator examine measures to be introduced. As illustrated in FIG. 1, the measure evaluation assistance system 100 includes a server 10 as a measure evaluation assistance device and a plurality of user terminals 70. The server 10 and the user terminal 70 are connected over a network 80 such as the Internet or a LAN (local area network).

The server 10 is an information processing device that assists measure evaluation performed in the user terminal 70. More specifically, the server 10 executes a process of creating information useful for measure evaluation (a goodness distribution chart to be described later) and outputting the created information to the user terminal 70.

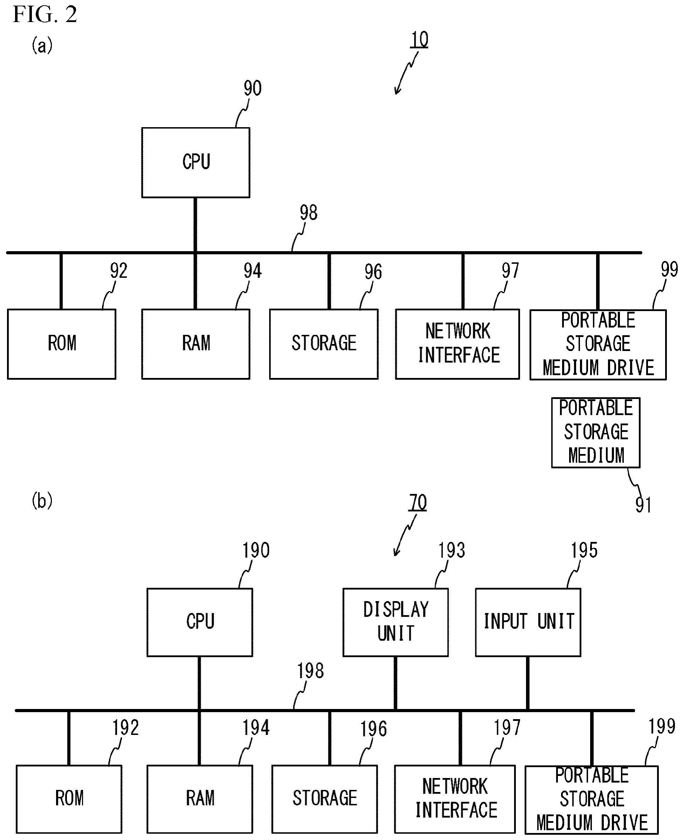

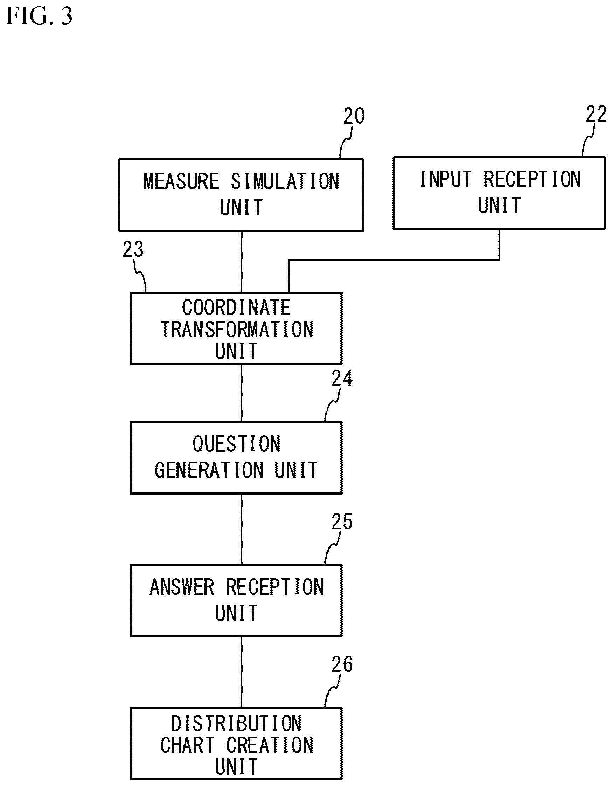

FIG. 2(a) illustrates a hardware configuration of the server 10. As illustrated in FIG. 2(a), the server 10 includes a CPU (Central Processing Unit) 90, a ROM (Read Only Memory) 92, a RAM (Random Access Memory) 94, a storage (for example, an SSD (Solid State Drive) or an HDD (Hard Disk Drive)) 96, a network interface 97, a portable storage medium drive 99, and the like. These components of the server 10 are connected to a bus 98. In the server 10, the functions of the various units illustrated in FIG. 3 are implemented by the CPU 90 executing programs (including a measure evaluation assistance program) stored in the ROM 92 or the storage 96, or programs read from a portable storage medium 91 by the portable storage medium drive 99. The functions of FIG. 3 may be implemented by an integrated circuit such as an ASIC (Application Specific Integrated Circuit) or an FPGA (Field Programmable Gate Array).

The user terminal 70 is a terminal (a PC, a smartphone, or the like) used by an interested party (stakeholder) of the measure. The interested party is, for example, a local government or a business operator, and a person who uses the user terminal 70 is hereinafter referred to as a user. The user terminal 70 displays information transmitted from the server 10, and transmits information input by the user and operation information to the server 10.

FIG. 2(b) illustrates a hardware configuration of the user terminal 70. As illustrated in FIG. 2(b), the user terminal 70 includes a CPU 190, a ROM 192, a RAM 194, a storage 196, a network interface 197, a display unit 193, an input unit 195, a portable storage medium drive 199, and the like. The display unit 193 includes a liquid crystal display or the like, and the input unit 195 includes a keyboard, a mouse, a touch panel, or the like. These components of the user terminal 70 are connected to a bus 198.

### (About Functions of Server 10)

FIG. 3 illustrates a functional block diagram of the server 10.

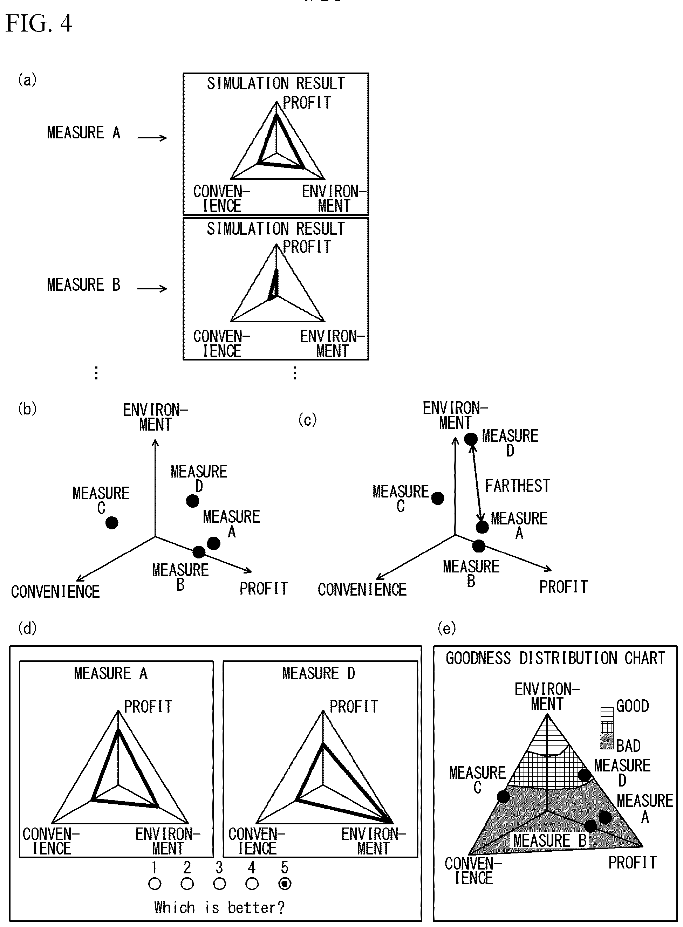

In the server 10, the CPU 90 (FIG. 2(a)) executes a program to implement functions as a measure simulation unit 20, an input reception unit 22, a coordinate transformation unit 23, a question generation unit 24, an answer reception unit 25, and a distribution chart creation unit 26. The details of each unit will be described below. FIG. 4(a) to FIG. 4(e) illustrate an overview of a process of the server 10.

The measure simulation unit 20 acquires information on measures input in the user terminal 70 and executes simulation of a plurality of measures. For example, as illustrated in FIG. 4(a), the measure simulation unit 20 performs simulation regarding a plurality of evaluation items (profit, convenience, environment, and the like) for a plurality of measures A, B, .... Then, as illustrated in FIG. 4(b), the measure simulation unit 20 plots the measure in an evaluation value space (first evaluation value space) in which the plurality of evaluation items are set as a coordinate system.

The input reception unit 22 receives input of information (values information) on an evaluation item on which the user places emphasis. For example, when the user emphasizes "environment" most, the values information indicating that is input to the user terminal 70, and thus the input reception unit 22 acquires that values information. The values information is expressed by a ratio (degree of emphasis) indicating which evaluation item is emphasized by the user and how much the user emphasizes the evaluation item, and is expressed by values such as profit = 0.1, convenience = 0.1, and environment = 0.8.

The coordinate transformation unit 23 performs the coordinate transformation of the evaluation value space based on the acquired values information. When the user inputs the values information indicating that the environment is emphasized most (for example, the degree of emphasis is profit = 0.1, convenience = 0.1, and environment = 0.8), the coordinate transformation (weighting) is performed so that the difference becomes large for the evaluation item that is emphasized. As a result, the evaluation value space of FIG. 4(b) becomes an evaluation value space (second evaluation value space) illustrated in FIG. 4(c).

The question generation unit 24 extracts a plurality of combinations (pairs) of measures that are separated by a distance in the coordinate-transformed evaluation value space, generates questions using the extracted pairs of measures, and conducts a relative evaluation questionnaire. For example, when one of the plurality of pairs extracted from FIG. 4(c) is a pair of the measure A and the measure D, the question generation unit 24 generates a screen on which questions are described as illustrated in FIG. 4(d), and conducts the relative evaluation questionnaire. The question generation unit 24 transmits the screen of FIG. 4(d) to the user terminal 70. The user relatively evaluates which of the measures A and D is better on this screen, and inputs the evaluation result (any of 1 to 5). In practice, the question generation unit 24 describes questions about all pairs extracted in the evaluation value space of FIG. 4(c) on the screen of FIG. 4(d). Each of the plurality of pairs extracted by the question generation unit 24 is a pair of measures separated by a distance in the coordinate-transformed evaluation value space (a pair of measures having a large difference in the value of the evaluation item emphasized by the user). Therefore, the user can relatively easily determine which measure is better in any of the questions.

The answer reception unit 25 acquires information input (answered) by the user on the screen of FIG. 4(d), and transmits the acquired information to the distribution chart creation unit 26.

The distribution chart creation unit 26 creates a distribution chart (a goodness distribution chart) indicating a range considered good or a range considered bad by the user in the evaluation value space (FIG. 4(b)) based on the answers received by the answer reception unit 25 using the same method as that of the above-mentioned Non-Patent Literature 1 (see FIG. 4(e)). Then, the distribution chart creation unit 26 generates a screen illustrated in FIG. 4(e) and transmits the screen to the user terminal 70. The user can see which measure located at which position in the evaluation value space is a good measure for the user by referring to the screen of FIG. 4(e), and can see that the measure D is the best among the measures A to D.

### (About Process of Server 10)

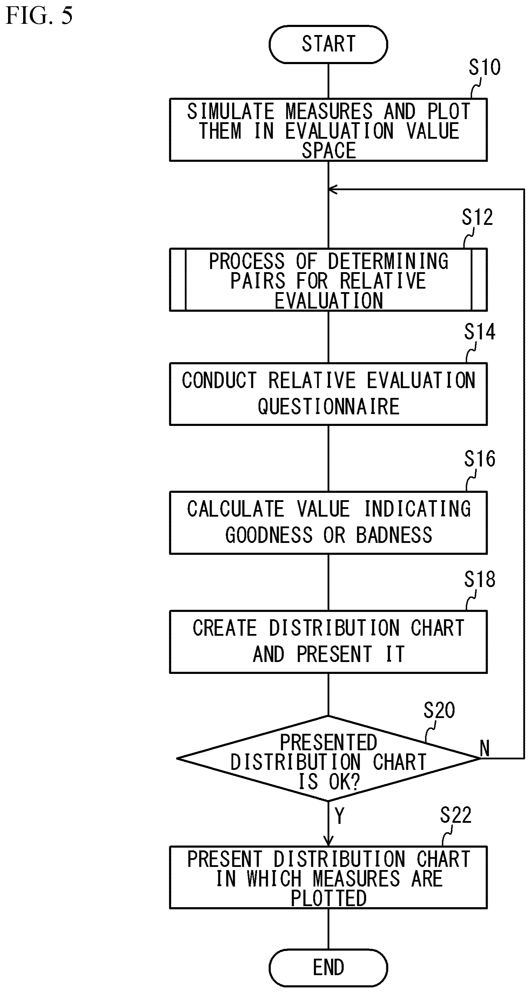

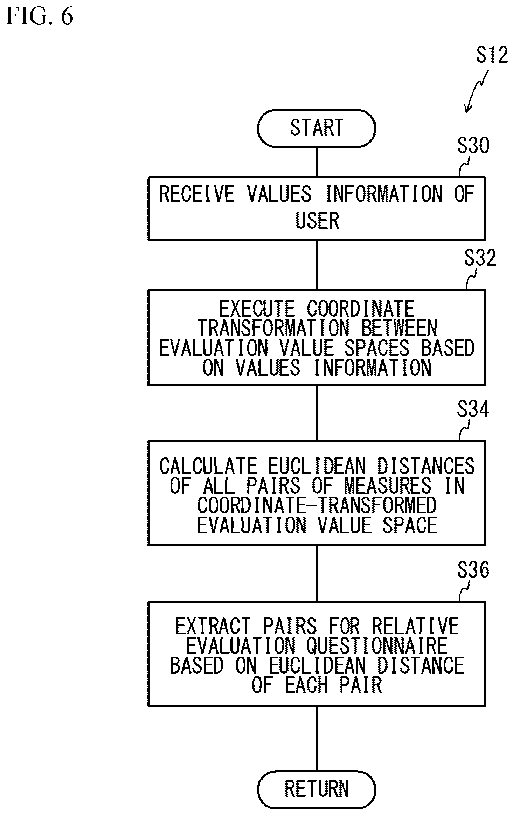

Next, the process of the server 10 will be described in detail along the flowcharts of FIG. 5 and FIG. 6 with reference to other drawings as appropriate. In the following description, a case where a local government and a business operator examine measures for how many shared e-scooters provided by the business operator should be arranged at which locations at the beginning (for example, at 8:00 a.m.) of each day when the local government introduces the shared e-scooters will be described. In the following description, for convenience of explanation, it is assumed that the evaluation value space of the measures is a two-dimensional space having coordinate axes of two evaluation items (the environmental evaluation value and the profit evaluation value). The environmental evaluation value is larger for lower CO₂ emissions, and the profit evaluation value is larger for higher profits.

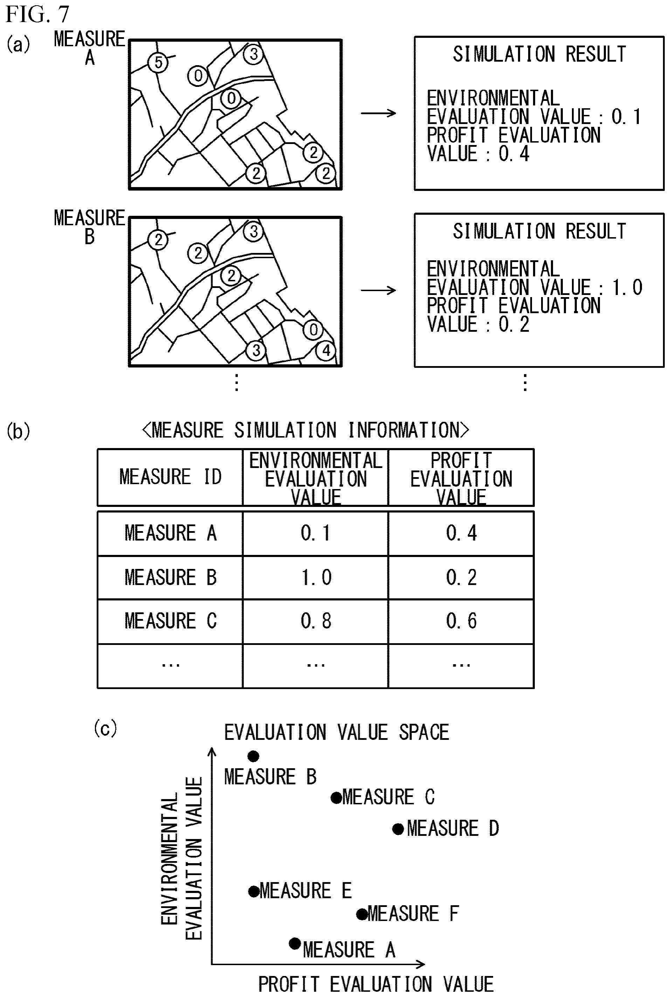

When the process of FIG. 5 is started, first, in step S10, the measure simulation unit 20 simulates a plurality of measures and plots the measures in the evaluation value space. Specifically, the measure simulation unit 20 generates a plurality of measures A, B, ... as illustrated in FIG. 7(a). The plurality of measures A, B, ... are different from each other in the arrangement locations and the number of shared e-scooters. The measure simulation unit 20 simulates the degree to which the adoption of each generated measure can change the movement of people from automobiles to shared e-scooters, and obtains measure simulation information (the environmental evaluation value and the profit evaluation value for each measure). FIG. 7(b) illustrates an example of the measure simulation information. Then, as illustrated in FIG. 7(c), the measure simulation unit 20 plots each measure in a two-dimensional evaluation value space having two evaluation items (the profit evaluation value and the environmental evaluation value) as coordinate axes.

Then, in step S12 of FIG. 5, the server 10 executes a subroutine of a pairing process for relative evaluation. In step S12, the server 10 executes the process in accordance with the flowchart of FIG. 6.

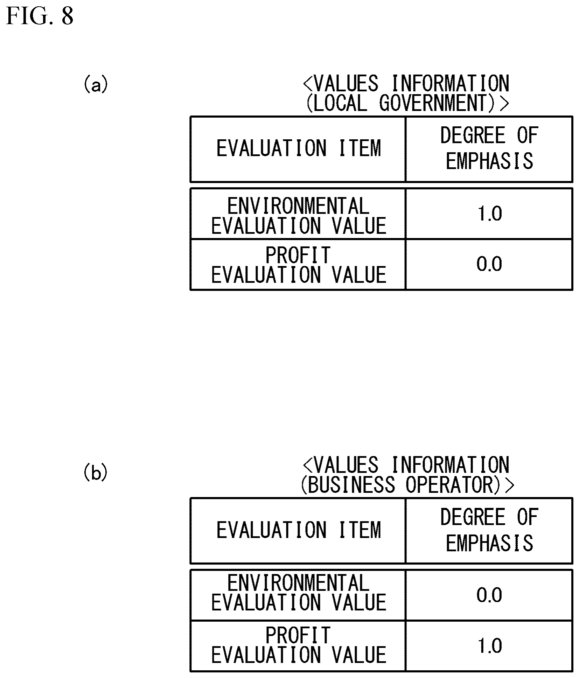

When the process of FIG. 6 is started, first, in step S30, the input reception unit 22 receives the values information of the user. For example, when the user is a staff member of the local government, the values information (see FIG. 8(a)) in which the degree of emphasis on the environmental evaluation value is higher than the degree of emphasis on the profit evaluation value is received. On the other hand, when the user is the business operator, the values information (see FIG. 8(b)) in which the degree of emphasis on the profit evaluation value is higher than the degree of emphasis on the environmental evaluation value is received.

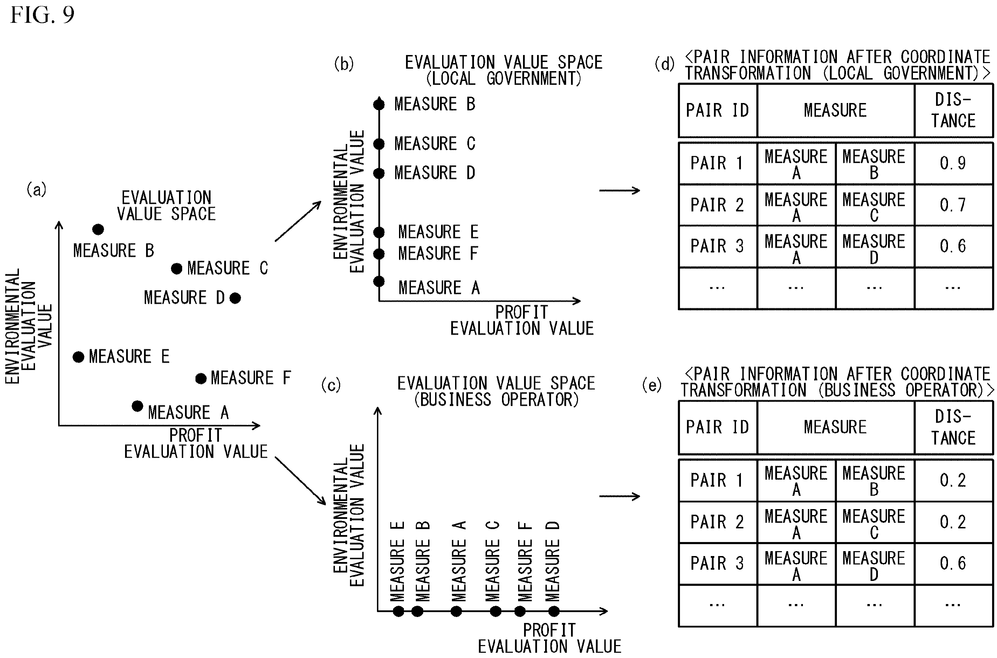

Then, in step S32, the coordinate transformation unit 23 performs coordinate transformation of the evaluation value space based on the values information received by the input reception unit 22. For example, when the user is a staff member of the local government, the evaluation value space illustrated in FIG. 9(b) is obtained by weighting each coordinate axis (evaluation item) of the evaluation value space illustrated in FIG. 9(a) with the degree of emphasis illustrated in FIG. 8(a). Further, for example, when the user is the business operator, each coordinate axis (evaluation item) of the evaluation value space illustrated in FIG. 9(a) is weighted by the degree of emphasis illustrated in FIG. 8(b), thereby obtaining the evaluation value space illustrated in FIG. 9(c).

Then, in step S34, the question generation unit 24 calculates the Euclidean distance (linear distance between two points) of each of all pairs of measures in the coordinate-transformed evaluation value space. For example, when the user is a staff member of the local government, the pair information after coordinate transformation as illustrated in FIG. 9(d) is obtained. When the user is the business operator, the pair information after coordinate transformation as illustrated in FIG. 9(e) is obtained.

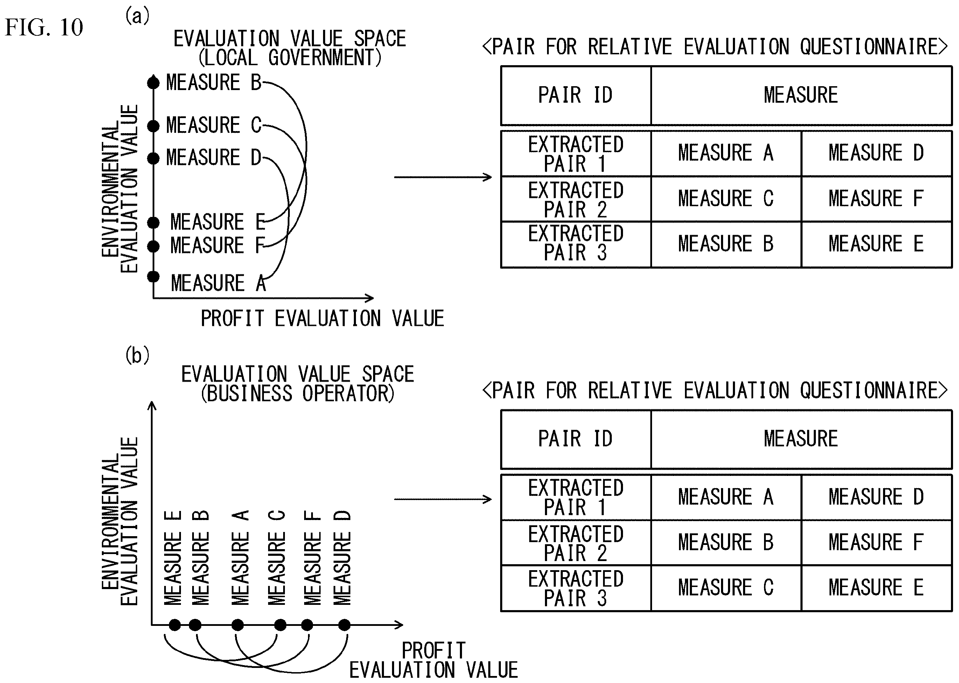

Then, in step S36, the question generation unit 24 extracts pairs for a relative evaluation questionnaire based on the respective Euclidean distances of the pairs. FIG. 10(a) illustrates an example of a pair extraction method in the case where the user is a staff member of the local government. FIG. 10(b) illustrates an example of a pair extraction method in the case where the user is the business operator. In the present embodiment, each measure is extracted evenly, and pairs with relatively long distances are extracted. For example, in FIG. 10(a), a pair of the measure A having the smallest environmental evaluation value and the measure D having the fourth smallest environmental evaluation value, a pair of the measure F having the second smallest environmental evaluation value and the measure C having the fifth smallest environmental evaluation value, and a pair of the measure E having the third smallest environmental evaluation value and the measure B having the sixth smallest environmental evaluation value are extracted. For example, in FIG. 10(b), a pair of the measure E having the smallest profit evaluation value and the measure C having the fourth smallest profit evaluation value, a pair of the measure B having the second smallest profit evaluation value and the measure F having the fifth smallest profit evaluation value, and a pair of the measure A having the third smallest profit evaluation value and the measure D having the sixth smallest profit evaluation value are extracted.

After the process is performed up to step S36, the process of FIG. 6 is terminated, and the process proceeds to step S14 of FIG. 5.

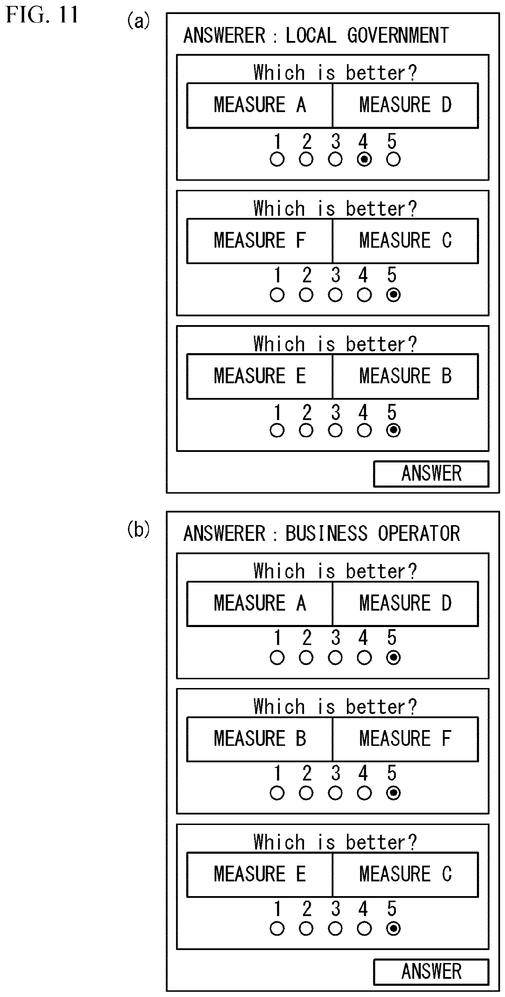

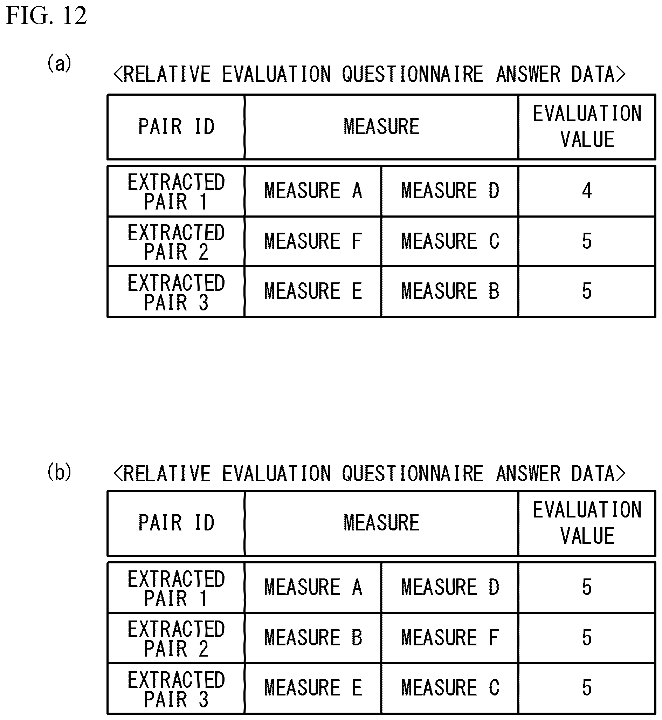

In step S14, the question generation unit 24 conducts the relative evaluation questionnaire. Specifically, when the user is a staff member of the local government, the question generation unit 24 generates a screen of a relative evaluation questionnaire as illustrated in FIG. 11(a), and transmits the screen to the user terminal 70. When the user is the business operator, the question generation unit 24 generates a screen of a relative evaluation questionnaire as illustrated in FIG. 11(b), and transmits the screen to the user terminal 70. Although only the name of the measure is described on the screens of FIG. 11(a) and FIG. 11(b), in practice, the details of the measure, the scores of the respective evaluation items of the measure, and the like are described. The user answers which measure is better on a 5-point scale in the screen of FIG. 11(a) or FIG. 11(b). On a 5-point scale of 1 to 5, 1: the measure on the left side is good, 2: the measure on the left side is rather good, 3: the same, 4: the measure on the right side is rather good, and 5: the measure on the right side is good. In this case, the answer reception unit 25 acquires the answer results of the user (see FIG. 12(a) and FIG. 12(b)) and transmits the answer results to the distribution chart creation unit 26.

Then, in step S16, the distribution chart creation unit 26 calculates a value (goodness value) indicating goodness or badness at each point in the evaluation value space based on the answer results of the user (FIG. 12(a), FIG. 12(b)). In this case, the distribution chart creation unit 26 calculates a value indicating goodness or badness using the technique described in the above-mentioned Non-Patent Literature 1.

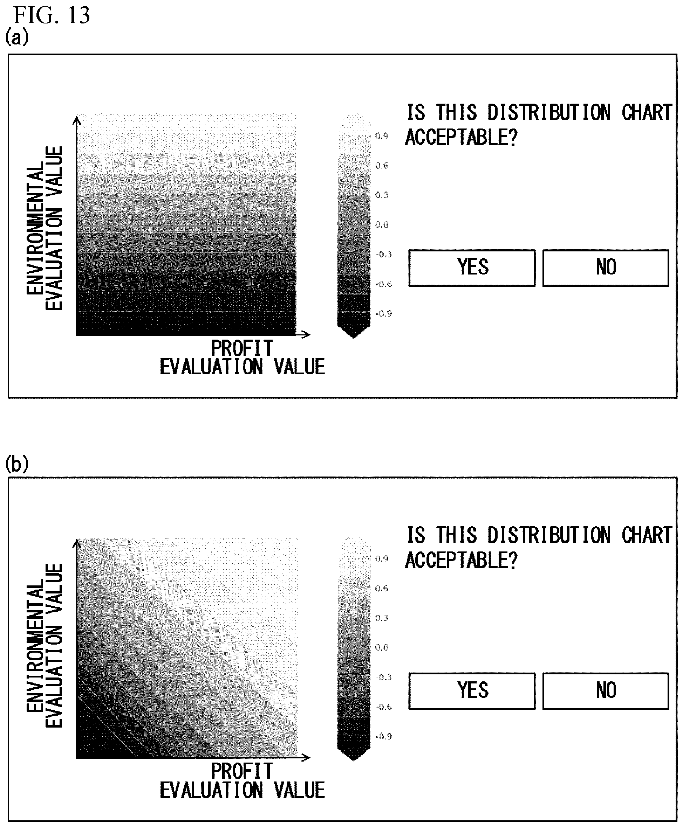

Then, in step S18, the distribution chart creation unit 26 generates a goodness distribution chart based on the calculation result in step S16, and presents the goodness distribution chart to the user. For example, a screen as illustrated in FIG. 13(a) is displayed on the user terminal 70. The distribution chart of FIG. 13(a) is expressed in grayscale for convenience, but may be expressed by color gradation. The user presses the "YES" button if the displayed distribution chart is acceptable, and presses the "NO" button if the displayed distribution chart is not acceptable. Depending on the contents of the answers of the user to the relative evaluation questionnaire, a goodness distribution chart as illustrated in FIG. 13(b) may be generated.

Then, in step S20, the distribution chart creation unit 26 determines whether the presented distribution chart is acceptable. That is, the distribution chart creation unit 26 determines whether the "YES" button is pressed on the screen of FIG. 13(a) or FIG. 13(b). When the determination in step S20 is negative, the process returns to step S12. Then, the process after the pairing process for relative evaluation (S12) is executed again after increasing or decreasing the number of pairs to be extracted or changing the extracted pairs (combinations of measures).

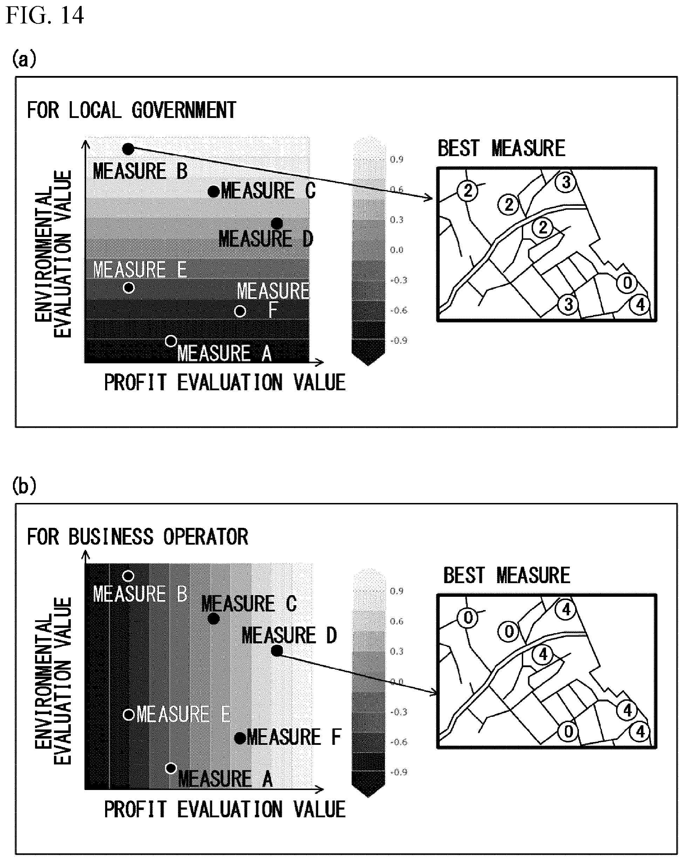

On the other hand, when the determination in step S20 is affirmative, the process proceeds to step S22, and the distribution chart creation unit 26 presents the user with a distribution chart in which the measures are plotted. Specifically, when the user is a staff member of the local government, the distribution chart creation unit 26 generates a screen as illustrated in FIG. 14(a) and transmits the screen to the user terminal 70. On the other hand, when the user is the business operator, the distribution chart creation unit 26 generates a screen as illustrated in FIG. 14(b) and transmits the screen to the user terminal 70. It is understood that the best measure for the user (local government) is the measure B in the screen in FIG. 14(a), and the best measure for the user (business operator) is the measure D in the screen in FIG. 14(b). Further, by bringing the screens illustrated in FIG. 14(a) and FIG. 14(b) to the meeting, each user can learn the best measures from their respective standpoints, as well as the measure (for example, measure C) that allows mutual compromise, which facilitates consensus building. In the screens of FIG. 14(a) and FIG. 14(b), the contents of each measure can be checked by clicking the name of each measure.

After the process of step S22 is performed as described above, the entire process of FIG. 5 is completed.

As described above in detail, according to the present embodiment, the measure simulation unit 20 plots the results of evaluating each of a plurality of measures by a plurality of evaluation items on the evaluation value space (first evaluation value space). The coordinate transformation unit 23 sets a weight for each of the plurality of evaluation items based on the degree (degree of emphasis) to which the user emphasizes each of the plurality of evaluation items, and performs coordinate transformation (generates a second evaluation value space) by reflecting the weight on each of the coordinate axes of the evaluation value space. The question generation unit 24 extracts a plurality of pairs of measures that are as far apart as possible based on the degrees of similarities (Euclidean distances) of the plurality of measures in the coordinate-transformed evaluation value space, and conducts a relative evaluation questionnaire. Then, the distribution chart creation unit 26 creates a goodness distribution chart in the evaluation value space based on the answer results of the relative evaluation questionnaire received by the answer reception unit 25, and transmits the goodness distribution chart to the user terminal 70. Thus, in the present embodiment, since a relative evaluation questionnaire can be conducted using a pair of measures that do not have very similar values for the evaluation item on which the user places emphasis, the user can easily answer the goodness or badness of the measures included in the pair. Therefore, even if the number of questions in the relative evaluation questionnaire is small, the reliability of the relative evaluation questionnaire can be improved, and a goodness distribution chart with high accuracy can be provided to the user. In this case, the user can appropriately execute consensus building in discussions with other users (interested parties) regarding measures by using the goodness distribution chart with high accuracy. In other words, it can assist users in evaluating measures. For example, the pairwise comparison process of Non-Patent Literature 1 needs to be performed many times (for example, 100 times or more), but the number of questions can be significantly reduced (for example, to about 10 to 20 or less) by extracting pairs of measures and conducting a relative evaluation questionnaire as in the present embodiment. In the present embodiment, since the relative evaluation questionnaire is a questionnaire related to individual values, the same user needs to answer the questionnaire. However, the burden on the user can be reduced by significantly reducing the number of questions as described above.

In the present embodiment, the input reception unit 22 acquires the values information (the degree of emphasis on each of the plurality of evaluation items) of the user input by the user, and the coordinate transformation unit 23 performs the coordinate transformation of the evaluation value space based on the acquired values information. Thus, the coordinate transformation of the evaluation value space can be easily performed using the values information input by the user.

In the above embodiment, the case where the user determines whether the presented distribution chart is acceptable in step S20 of FIG. 5 has been described, but this does not intend to suggest any limitation. For example, the processes of steps S12 to S20 may be repeatedly executed while changing the type and number of measures to be plotted in the evaluation value space, and the determination of step S20 may be affirmed when the server recognizes that the goodness distribution chart is no longer changing.

### (Variation)

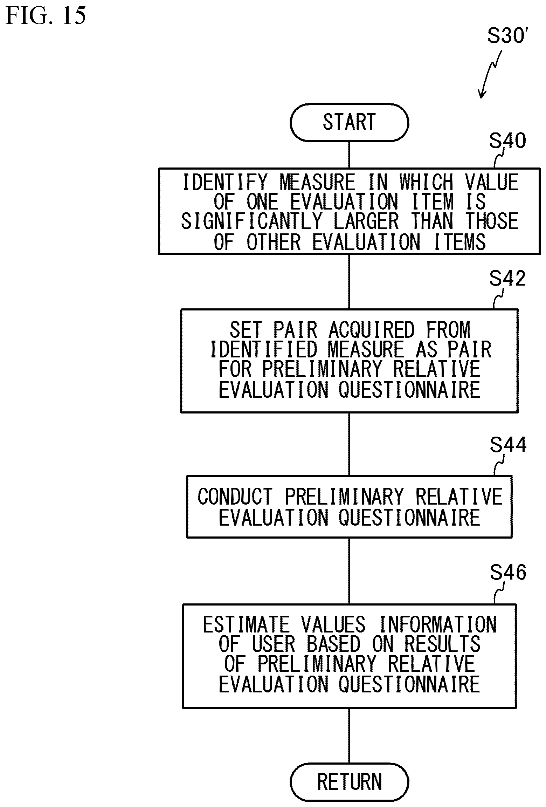

In the above embodiment, the case where the user inputs the values information in step S30 of FIG. 6 has been described, but this does not intend to suggest any limitation. Each user may not know his/her own values information. In this case, the coordinate transformation unit 23 of the server 10 may execute the process of step S30' of FIG. 15 instead of step S30 of FIG. 6.

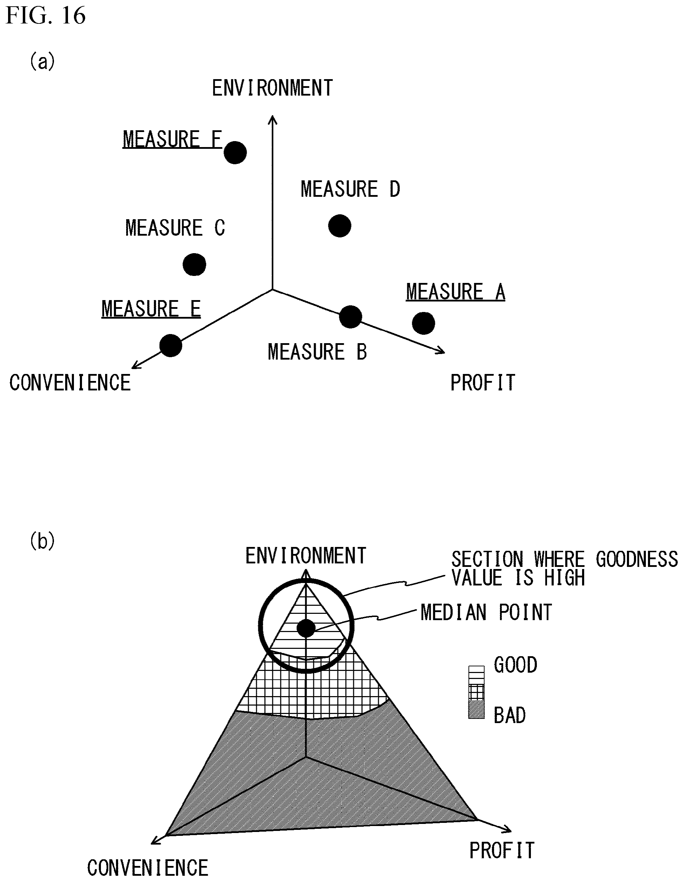

In the process of FIG. 15, first, in step S40, the coordinate transformation unit 23 identifies a measure in which the value of one evaluation item is extremely larger than the values of other evaluation items. For example, as illustrated in FIG. 16(a), it is assumed that there is a three-dimensional evaluation value space having coordinate axes of three evaluation items (environment, profit, and convenience). In this case, the coordinate transformation unit 23 identifies a measure F in which the evaluation item "environment" is larger than the profit and the convenience, a measure A in which the evaluation item "profit" is larger than the environment and the convenience, and a measure E in which the evaluation item "convenience" is larger than the profit and the environment.

Then, in step S42, the coordinate transformation unit 23 sets pairs obtained from the identified measures as pairs for a preliminary relative evaluation questionnaire (for a preliminary test). In the example of FIG. 16(a), the coordinate transformation unit 23 sets a pair of the measure A and the measure E, a pair of the measure E and the measure F, and a pair of the measure F and the measure A as pairs for the preliminary relative evaluation questionnaire.

Then, in step S44, the coordinate transformation unit 23 conducts the preliminary relative evaluation questionnaire using the pairs for the preliminary relative evaluation questionnaire identified in step S42. The method of the preliminary relative evaluation questionnaire is the same as that in step S14 of FIG. 5 (see FIG. 11(a) and FIG. 11(b)).

Then, in step S46, the coordinate transformation unit 23 estimates the values information of the user based on the results of the preliminary relative evaluation questionnaire. Specifically, as illustrated in FIG. 16(b), the coordinate transformation unit 23 creates a goodness distribution chart from the results of the preliminary relative evaluation questionnaire, and identifies the section having a high goodness value (section enclosed by a thick line circle in FIG. 16(b)). Then, the coordinate transformation unit 23 estimates the values information of the user based on the position of the center of gravity of the section having a high goodness value. For example, in the case of FIG. 16(b), the degree of emphasis on environment = 0.8, the degree of emphasis on profit = 0.1, the degree of emphasis on convenience = 0.1, and the like.

In this manner, the user can execute the processes in FIG. 6 and FIG. 7 even if the user does not know his/her own values information.

In the above embodiment, the case where the evaluation value space is an evaluation value space having two or three evaluation items as coordinate axes has been described, but this does not intend to suggest any limitation, and the evaluation value space may be an evaluation value space having four or more evaluation items as coordinate axes.

In the above embodiment, the case where the question generation unit 24 causes the user to relatively evaluate the goodness or badness of two measures (pair) in the relative evaluation questionnaire has been described. However, this does not intend to suggest any limitation, and the question generation unit 24 may cause the user to relatively evaluate three or more measures. Also in this case, the question generation unit 24 generates a relative evaluation questionnaire using three or more measures that are as far apart as possible in the coordinate-transformed evaluation value space.

In the above embodiment, the case where the server 10 executes the processes of FIG. 5, FIG. 6, and FIG. 15 has been described, but this does not intend to suggest any limitation. For example, the user terminal 70 may execute the processes of FIG. 5, FIG. 6, and FIG. 15.

The processing functions described above can be implemented by a computer. In this case, a program describing the processing contents of the functions to be included in the processing device is provided. By executing the program on a computer, the above processing functions are implemented on the computer. The program describing the processing contents may be recorded in a computer-readable storage medium (excluding a carrier wave).

When the program is distributed, for example, the program is sold in a form of a portable storage medium such as a DVD (Digital Versatile Disc) or a CD-ROM (Compact Disc Read Only Memory) in which the program is recorded. The program may be stored in a storage device of a server computer, and the program may be transferred from the server computer to another computer via a network.

A computer that executes the program stores the program recorded in a portable storage medium or the program transferred from the server computer in its own storage device, for example. The computer reads the program from its own storage device and executes the processes according to the program. The computer may read the program directly from the portable storage medium and execute the processes according to the program. Further, the computer can also sequentially execute processes according to the received program each time the program is transferred from the server computer.

The above-described embodiment is a preferred example of the present invention. However, the present disclosure is not limited to this, and various modifications can be made without departing from the scope of the present invention.

The following supplementary notes are further disclosed in relation to the above description of the embodiment.
(Supplementary Note 1) A measure evaluation assistance method characterized in that a computer executes a process including:
   plotting a result of evaluation of each of a plurality of measures by a plurality of evaluation items on a first evaluation value space having the plurality of evaluation items as coordinate axes;
   setting a weight for each of the plurality of evaluation items based on a degree to which a user emphasizes each of the plurality of evaluation items, and generating a second evaluation value space by reflecting the weight on each of the coordinate axes of the first evaluation value space;
   extracting a plurality of combinations of measures based on degrees of similarities of the plurality of measures in the second evaluation value space; and
   creating a distribution chart indicating a range in which evaluation by the user is high and a range in which the evaluation by the user is low in the first evaluation value space, based on a result of relative evaluation by the user of goodness or badness between measures included in each of extracted combinations, and outputting the distribution chart.
(Supplementary Note 2) The measure evaluation assistance method according to Supplementary Note 1, characterized in that the computer executes a process of acquiring a result of relative evaluation by the user of goodness or badness between measures included in a combination of measures for a preliminary test, and estimating a degree to which the user emphasizes each of the plurality of evaluation items based on the result of the relative evaluation.
(Supplementary Note 3) The measure evaluation assistance method according to Supplementary Note 2, characterized by identifying measures in which an evaluation of one evaluation item is higher than an evaluation of another evaluation item from among the plurality of measures plotted on the first evaluation value space, and setting a combination of identified measures as the combination of measures for the preliminary test.
(Supplementary Note 4) The measure evaluation assistance method according to Supplementary Note 3, characterized in that the computer executes a process of acquiring a degree to which the user emphasizes each of the plurality of evaluation items, the degree being input by the user.
(Supplementary Note 5) The measure evaluation assistance method according to any one of Supplementary Notes 1 to 4, characterized in that the combination of measures is a pair of two measures.
(Supplementary Note 6) The measure evaluation assistance method according to any one of Supplementary Notes 1 to 5, characterized in that the process of the extracting includes preferentially extracting a combination of measures having a large distance in the second evaluation value space.
(Supplementary Note 7) A measure evaluation assistance program causing a computer to execute a process including:
   plotting a result of evaluation of each of a plurality of measures by a plurality of evaluation items on a first evaluation value space having the plurality of evaluation items as coordinate axes;
   setting a weight for each of the plurality of evaluation items based on a degree to which a user emphasizes each of the plurality of evaluation items, and generating a second evaluation value space by reflecting the weight on each of the coordinate axes of the first evaluation value space;
   extracting a plurality of combinations of measures based on degrees of similarities of the plurality of measures in the second evaluation value space; and
   creating a distribution chart indicating a range in which evaluation by the user is high and a range in which the evaluation by the user is low in the first evaluation value space, based on a result of relative evaluation by the user of goodness or badness between measures included in each of extracted combinations, and outputting the distribution chart.
(Supplementary Note 8) A measure evaluation assistance device comprising a processing unit that executes a process including:
   plotting a result of evaluation of each of a plurality of measures by a plurality of evaluation items on a first evaluation value space having the plurality of evaluation items as coordinate axes;
   setting a weight for each of the plurality of evaluation items based on a degree to which a user emphasizes each of the plurality of evaluation items, and generating a second evaluation value space by reflecting the weight on each of the coordinate axes of the first evaluation value space; and
   extracting a plurality of combinations of measures based on degrees of similarities of the plurality of measures in the second evaluation value space; and
   creating a distribution chart indicating a range in which evaluation by the user is high highly and a range in which the evaluation by the user is high in the first evaluation value space, based on a result of relative evaluation by the user of goodness or badness between measures included in each of extracted combinations, and outputting the distribution chart.

### DESCRIPTION OF SYMBOLS

- 10: Server (Measure evaluation assistance device)
- 20: Measure simulation unit
- 22: Input reception unit
- 23: Coordinate transformation unit
- 24: Question generation unit
- 25: Answer reception unit
- 26: Distribution chart creation unit
- 70: User terminal
- 90: CPU (Processing unit)

## Claims

1. A measure evaluation assistance method **characterized in that** a computer executes a process including:
plotting a result of evaluation of each of a plurality of measures by a plurality of evaluation items on a first evaluation value space having the plurality of evaluation items as coordinate axes;
setting a weight for each of the plurality of evaluation items based on a degree to which a user emphasizes each of the plurality of evaluation items, and generating a second evaluation value space by reflecting the weight on each of the coordinate axes of the first evaluation value space;
extracting a plurality of combinations of measures based on degrees of similarities of the plurality of measures in the second evaluation value space; and
creating a distribution chart indicating a range in which evaluation by the user is high and a range in which the evaluation by the user is low in the first evaluation value space, based on a result of relative evaluation by the user of goodness or badness between measures included in each of extracted combinations, and outputting the distribution chart.

2. The measure evaluation assistance method according to claim 1, **characterized in that** the computer executes a process of acquiring a result of relative evaluation by the user of goodness or badness between measures included in a combination of measures for a preliminary test, and estimating a degree to which the user emphasizes each of the plurality of evaluation items based on the result of the relative evaluation.

3. The measure evaluation assistance method according to claim 2, **characterized by** identifying measures in which an evaluation of one evaluation item is higher than an evaluation of another evaluation item from among the plurality of measures plotted on the first evaluation value space, and setting a combination of identified measures as the combination of measures for the preliminary test.

4. The measure evaluation assistance method according to claim 1, **characterized in that** the computer executes a process of acquiring a degree to which the user emphasizes each of the plurality of evaluation items, the degree being input by the user.

5. The measure evaluation assistance method according to any one of claims 1 to 4, **characterized in that** the combination of measures is a pair of two measures.

6. The measure evaluation assistance method according to any one of claims 1 to 5, **characterized in that** the process of the extracting includes preferentially extracting a combination of measures having a large distance in the second evaluation value space.

7. A measure evaluation assistance program causing a computer to execute a process, the process including:
plotting a result of evaluation of each of a plurality of measures by a plurality of evaluation items on a first evaluation value space having the plurality of evaluation items as coordinate axes;
setting a weight for each of the plurality of evaluation items based on a degree to which a user emphasizes each of the plurality of evaluation items, and generating a second evaluation value space by reflecting the weight on each of the coordinate axes of the first evaluation value space;
extracting a plurality of combinations of measures based on degrees of similarities of the plurality of measures in the second evaluation value space; and
creating a distribution chart indicating a range in which evaluation by the user is high and a range in which the evaluation by the user is low in the first evaluation value space, based on a result of relative evaluation by the user of goodness or badness between measures included in each of extracted combinations, and outputting the distribution chart.

8. The measure evaluation assistance program according to claim 7, **characterized in that** the computer executes a process of acquiring a result of relative evaluation by the user of goodness or badness between measures included in a combination of measures for a preliminary test, and estimating a degree to which the user emphasizes each of the plurality of evaluation items based on the result of the relative evaluation.

9. The measure evaluation assistance program according to claim 8, **characterized by** identifying a measure in which an evaluation of one evaluation item is higher than an evaluation of another evaluation item from among the plurality of measures plotted on the first evaluation value space; and setting an identified combination of measures as the combination of measures for the preliminary test.

10. The measures evaluation assistance program according to claim 7, **characterized in that** the computer executes a process of acquiring a degree to which the user emphasizes each of the plurality of evaluation items, the degree being input by the user.

11. The measure evaluation assistance program according to any one of claims 7 to 10, **characterized in that** the combination of measures is a pair of two measures.

12. The measure evaluation assistance program according to any one of claims 7 to 11, **characterized in that** the process of the extracting includes preferentially extracting a combination of measures having a large distance in the second evaluation value space.

13. A measure evaluation assistance device comprising a processing unit that executes a process including:
plotting a result of evaluation of each of a plurality of measures by a plurality of evaluation items on a first evaluation value space having the plurality of evaluation items as coordinate axes;
setting a weight for each of the plurality of evaluation items based on a degree to which a user emphasizes each of the plurality of evaluation items, and generating a second evaluation value space by reflecting the weight on each of the coordinate axes of the first evaluation value space;
extracting a plurality of combinations of measures based on degrees of similarities of the plurality of measures in the second evaluation value space; and
creating a distribution chart indicating a range in which evaluation by the user is high and a range in which the evaluation by the user is low in the first evaluation value space, based on a result of relative evaluation by the user of goodness or badness between measures included in each of extracted combinations, and outputting the distribution chart.

14. The measure evaluation assistance device according to claim 13, **characterized in that** the processing unit acquires a result of relative evaluation by the user of goodness or badness between measures included in a combination of measures for a preliminary test, and estimates a degree to which the user emphasizes each of the plurality of evaluation items based on the result of the relative evaluation.

15. The measure evaluation assistance device according to claim 14, **characterized in that** the processing unit identifies measures in which an evaluation of one evaluation item is higher than an evaluation of another evaluation item from among the plurality of measures plotted on the first evaluation value space, and sets a combination of identified measures as the combination of measures for the preliminary test.

16. The measure evaluation assistance device according to claim 13, **characterized in that** the processing unit acquires a degree to which the user emphasizes each of the plurality of evaluation items, the degree being input by the user.

17. The measure evaluation assistance device according to any one of claims 13 to 16, **characterized in that** the combination of measures is a pair of two measures.

18. The measure evaluation assistance device according to any one of claims 13 to 17, **characterized in that** the processing unit preferentially extracts a combination of measures having a large distance in the second evaluation value space.
